# EUROPEAN PATENT APPLICATION

(11) **EP 2 728 642 A1**
(43) Date of publication of application: **07.05.2014**
(21) Application number: 13177001.8
(22) Date of filing: 18.07.2013
(51) Int. Cl.: H01M 2/04, H01M 10/42

(54) **Battery pack**

(30) Priority: 01.11.2012 US 201261721239 P; 15.03.2013 US 201313836199
(71) Applicant: Samsung SDI Co., Ltd., Gyeonggi-do (KR)
(72) Inventor: Baek, Woon-Seong, Gyeonggi-do (KR); Kim, Hyung-Shin, Gyeonggi-do (KR); Kim, Yeong-Mi, Gyeonggi-do (KR)
(74) Representative: Walaski, Jan Filip

(57) **Abstract**

A battery pack includes a bare cell, a support member positioned at the top of the bare cell and a top case that covers the support member. In the battery pack, a protruding portion is formed in an end of the support member, and a receiving portion is formed at a position corresponding to the protruding portion in the top case. Accordingly, the protruding portion is inserted into the receiving portion, so that it is possible to provide the battery pack to be stronger against external impact.

## Description

The present invention relates to a battery pack.

Recently, battery packs have been variously used as power sources of portable electronic devices. As the portable electronic devices are used in various fields, demands on battery packs are rapidly increased. The battery packs can be charged/discharged a plurality of times, and accordingly are economically and environmentally efficient. Thus, the use of the battery packs is encouraged.

Battery packs with increased capacity have been developed as the usage of smart phones increases. The increase in the capacity of the battery pack is connected to an increase in the weight of the battery pack, which causes problems including breakdown of a case, depression of the battery pack, etc.

Embodiments of the invention provide a battery pack which is resistant to external impact by employing a new structure.

According to an aspect of the present invention there is provided a battery pack comprising a bare cell, a support member mounted to the bare cell for receiving a protection circuit module and a top case arranged to cover the support member, wherein one end of the support member includes a protruding portion and a corresponding end of the top case includes a receiving portion that is arranged to receive the protruding portion.

Both ends of the support member may include the protruding portion.

The protruding portion may comprise one or more protrusions at the or each end of the support member.

The or each protrusion may have a rounded or rectangular profile.

The protruding portion may extend from a planar portion of the support member. The battery pack may further comprise a support element extending from the support member adjacent to the planar portion for supporting the top case.

The support member may further comprise a stepped portion adjacent to the support element for receiving an end portion of the protection circuit module.

The support member may further comprise guide portions for engaging with corresponding notches in the protection circuit module.

The support member may further comprise a plurality of first fastening portions for engaging with corresponding second fastening portions in the top case. The first fastening portions may comprise fastening projections and the second fastening portions may comprise recesses.

The battery pack may further comprise an adhesive member between the support member and the bare cell for fixing the support member to the bare cell.

The protection circuit module may include first and second lead plates connected to the bare cell through first and second through holes in the support member.

The battery pack may further comprise a fixing projection at one side of the top surface of the bare cell, wherein the support member includes a fixing hole for receiving the fixing projection.

A top surface of the protruding portion may not be in contact with a lower surface of the top case. The height of the protruding portion may be less than the depth of the receiving portion. In other words, there may be no interconnection or mechanical coupling between the protrusions and the receiving portion.

Other features and advantages of the present invention will become more fully apparent from the following detailed description, taken in conjunction with the accompanying drawings.

According to the present invention, it is possible to provide a battery pack in which the inside of an end portion of a top case is filled, so that the battery pack is stronger against external impact.

The accompanying drawings, together with the specification, illustrate exemplary embodiments of the present invention, and, together with the description, serve to explain the principles of the present invention.
FIG. 1 is a perspective view of a completed battery pack according to an embodiment of the present invention;
FIG. 2 is an exploded perspective view of the battery pack shown in FIG. 1;
FIG. 3 is an enlarged perspective view illustrating a coupling relationship of a support member, a protection circuit module and a top case, shown in FIG. 2;
FIG. 4 is a sectional view taken along line A-A of FIG. 1; and
FIG. 5 is a perspective view illustrating a support member according to another embodiment of the present invention.

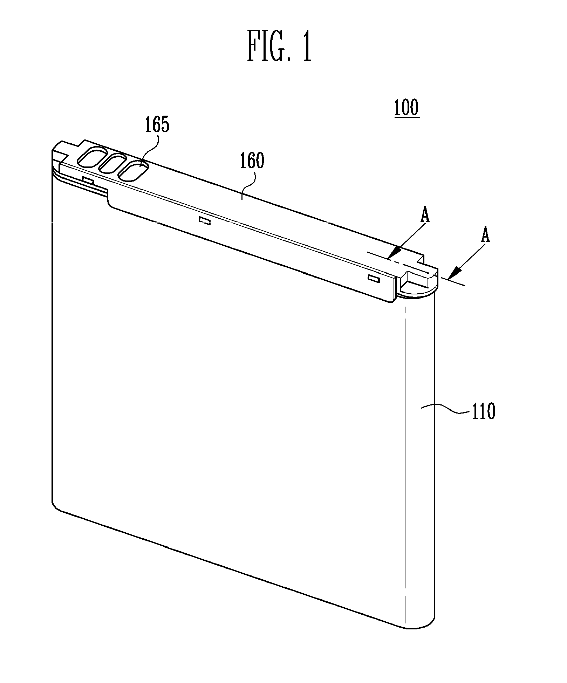

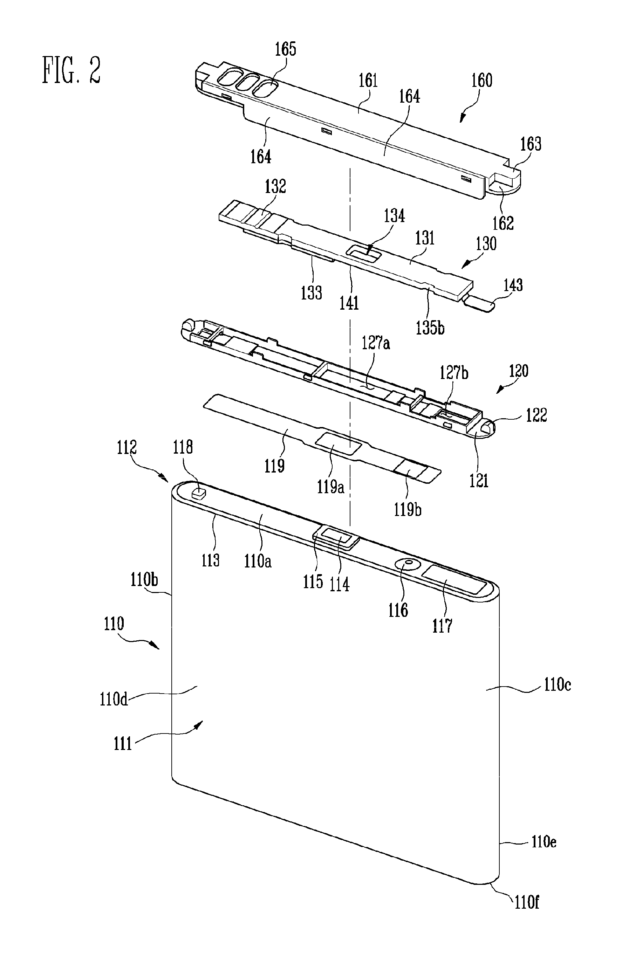

Referring to FIGS. 1 and 2, the battery pack 100 according to this embodiment may include a bare cell 110, a support member 120, a protection, or protective, circuit module 130 and a top case 160. The support member supports the protection circuit module 130 and is alternatively referred to as a holder case.

The support member 120 is disposed on the top of the bare cell 110, and the protection circuit module 130 is disposed on the top of the support member 120. The top case 160 is disposed on the top of the protection circuit module 130.

The bare cell 110 may include an electrode assembly (not shown) having a positive electrode, a negative electrode and a separator interposed between the positive and negative electrodes, a container-type can 111 which is made of metal and accommodates the electrode assembly and an electrolyte (not shown) and a cap assembly 112 that seals an opening of the can 111.

Here, the cap assembly 112 may include a cap plate 113 formed of metal, an electrode terminal 114 coupled to the cap plate 113 so as to protrude from the cap plate 113, and a gasket 115 interposed between the cap plate 113 and the electrode terminal 114 so as to insulate the electrode terminal 114 from the cap plate 113.

The bare cell 110, as shown in FIG. 2, includes a top surface 110a from which the electrode terminal 114 protrudes, a pair of short side surfaces 110b and 110c and a pair of long side surfaces 110d and 110e, which are connected to the top surface 110a, and a bottom surface 110f which is connected to the side surfaces 110b, 110c, 110d and 110e and is opposite to the top surface 110a. Here, the pair of short-side surfaces 110b and 110c are side surfaces having a narrow width among the side surfaces 110b, 110c, 110d and 110e connected to the top surface 110a of the bare cell 110, and the pair of long side surfaces 110d and 110e are side surfaces having a wide width among the side surfaces 110b, 110c, 110d and 110e connected to the top surface 110a of the bare cell 110.

An electrolyte injection hole 116 is formed at one side of the cap assembly 112. The electrolyte injection hole 116 is a portion through which the electrolyte is injected into the can 111, and the electrolyte is injected into the can 111 after the cap assembly 112 is assembled to the opening formed at the top of the can 111. Subsequently, the electrolyte injection hole 116 through which the electrolyte is injected into the can 111 is sealed with a separate sealing means formed of metal containing aluminium. Additionally, the electrolyte injection hole 116 can block the inflow of external air by coating a sealing member that is the separate sealing means on the top of the electrolyte injection hole 116. The electrolyte injection hole 116 having the sealing member coated thereon may have a convex shape such as a hemispherical shape.

A safety vent 117 is formed at the other side of the cap assembly 112. The safety vent 117 is formed thinner than the cap plate 113. If the internal pressure of the bare cell 110 is no less than the operating pressure of the safety vent 117, the safety vent 117 is opened to exhaust gas to the outside of the bare cell 110.

The support member 120 may be attached to the top surface 110a of the bare cell 110 by an adhesive member 119 disposed between the top surface 110a of the bare cell 110 and the support member 120.

Openings 119a and 119b may be formed in the adhesive member 119 so that the electrode terminal 114, the gasket 115 and the electrolyte injection hole 116 are protruded therethrough. Here, the adhesive member 119 may attach the support member 120 to the bare cell 110 using at least one of a separate adhesive and a double-faced tape.

A protruding portion 122 is formed in the direction of the top case 160 on a short side portion 121 of the support member 120, and a receiving portion 163 is formed at a position corresponding to that of the protruding portion 122 in the top case 160. The coupling structure between the protruding portion 122 and the receiving portion 163 will be described in detail later.

The protection circuit module 130 is disposed on the top of the support member 120, and may include a circuit board 131, an external terminal portion 132, a positive temperature coefficient (PTC) element 133 and a through-hole 134.

The circuit board 131 is formed with a plate made of resin, and includes a circuit (not shown) that controls charging/discharging of the bare cell 110 or a protection circuit (not shown) such as a circuit that prevents overcharging/overdischarging of the bare cell 110.

The external terminal portion 132 is mounted on a top surface of the circuit board 131, and functions to electrically connect the circuit board 131 and an external electronic device (not shown) to each other.

The PTC element 133 is mounted on a bottom surface of the circuit board 131. If the temperature inside the bare cell 110 increases, the resistance of the PTC element 133 suddenly increases, and thus the PTC element 133 blocks the flow of current.

The through-hole 134 is formed by passing through the top and bottom surfaces of the circuit board 131. The through-hole 134 is positioned to correspond to the electrode terminal 114. At least one of the width and length of the through-hole 134 is formed shorter than the width and length of the electrode terminal 114. Therefore, the electrode terminal 114 does not pass through the through-hole 134.

A first lead plate 141 disposed at a lower portion of the circuit board 131 is electrically connected to the electrode terminal 114 through a first through-hole 127a of the support member 120. The first lead plate 141 acts as a passage through which current from the electrode terminal 114 is transferred to the PTC element 133. The first lead plate 141 may be made of metal, e.g., nickel or nickel alloy.

A second lead plate 143 is coupled to the circuit board 131 at one side of the circuit board 131 so as to be electrically connected to a positive electrode wiring pattern (not shown) of the protection circuit module 130. The second lead plate 143 is extended to be connected to the top surface 110a of the bare cell 110 by passing through a second through-hole 127b of the support member 120, so that the bare cell 110 and the protection circuit module 130 are electrically connected by the second lead plate 143. That is, the second lead plate 143 is electrically connected to the top surface 110a of the bare cell 110 (i.e., acts as the positive electrode by being formed with the cap plate 113), so as to act as the positive electrode. The second lead plate 143 may be made of metal, e.g., nickel or nickel alloy.

The top case 160 covers the support member 120 disposed at the top of the bare cell 110, and accommodates the protection circuit module 130 in an internal space thereof. The top case 160 may include a case plate 161 and a side wall 164 extended in the direction of the protection circuit module 130 from the case plate 161.

The top case 160 may be formed to have a shape approximately similar to the top surface 110a of the bare cell 110. The inner surface of the case plate 161 comes in contact with the top surface of the circuit board 131. The case plate 161 includes a terminal hole 165 formed in a region corresponding to the external terminal portion. The terminal hole 165 exposes the external terminal portion 132 to the outside of the battery pack 100, so that the battery back 100 can be electrically connected to the external electronic device (not shown).

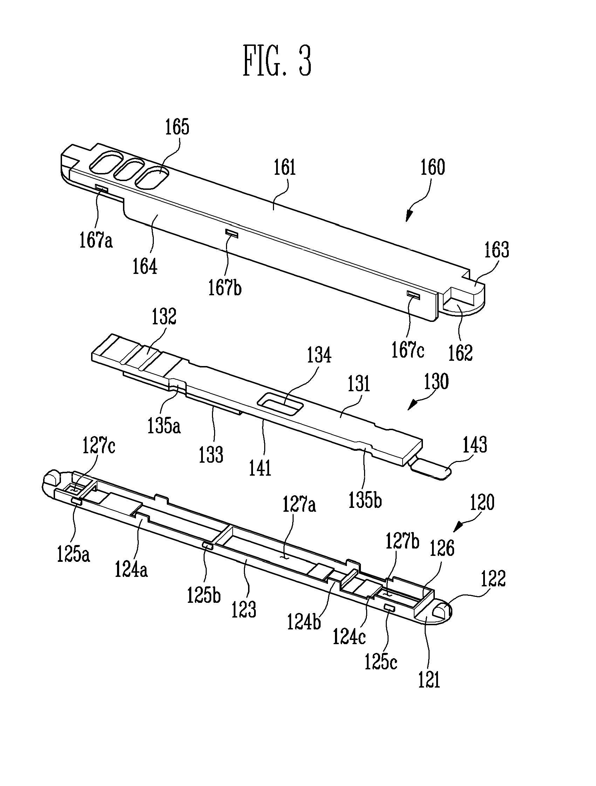

FIG. 3 is an enlarged perspective view illustrating a coupling relationship of the support member, the protection circuit module and the top case, shown in FIG. 2.

Referring to FIG. 3, the support member 120 includes guide portions 124a and 124b formed to extend in the direction of the protection circuit module 130 from sides of the support member 120. The protection circuit module 130 may further include notch portions 135a and 135b formed at sides thereof. The guide portions 124a and 124b are coupled to the respective notch portions 135a and 135b so as to guide the position of the protection circuit module 130 on the support member 120. Each of the guide portions 124a and 124b may be provided with a pair of guide portions respectively formed at both side surfaces 123 of the support member 120.

The support member 120 may include a support portion 126 extended from a portion adjacent to the second through-hole 127b of the support member 120. When the support member 120 is covered by the top case 160, the support portion 126 may be adhered closely to the bottom surface of the top case 160 so as to support the top case 160.

A stepped portion 124c may be formed at one side of the support portion 126 of the support member 120. One side of the protection circuit module 130 having the second lead plate 143 coupled thereto is mounted on the stepped portion 124c so as to be guided on the support member 120.

A fixing hole 127c is formed at one side of the support member 120. The fixing hole 127c is coupled to a fixing projection (118 of FIG. 2) formed corresponding to the fixing hole 127 at one side of the top surface 110a of the bare cell 110, so that the support member 120 can be guided on the bare cell 110.

First fastening portions 125a, 125b and 125c for coupling the support member 120 to the top case 160 may be formed at the side surface 123 of the support member 120. The first fastening portions, for example, projections 125a, 125b and 125c are respectively inserted and fixed into second fastening portions, for example, recesses 167a, 167b and 167c formed at the side wall 164, corresponding to the positions of the first fastening portions 125a, 125b and 125c, so that the top case 160 and the support member 120 can be coupled to each other.

The receiving portion 163 having a groove formed in the direction of the support member 120 is formed in an end, also referred to as a short side portion, 162 of the case plate 161. Generally, a space for accommodating the protection circuit module 130 is formed inside the top case 160, and an empty space is also formed inside the short side portion 162 of the top case 160. Therefore, the short side portion 162 of the top case 160 may be recessed or broken by impact caused when the battery pack 100 drops.

To solve such a problem, the top case 160 may be injection-molded so that no empty space exists inside the short side portion 162, but, in this case, a non-molded portion may be formed.

Thus, in the present invention, the protruding portion 122 is formed in the direction of the top case 160 in the end, also referred to as the short side portion, 121 of the support member 120, and is filled in the empty space in the receiving portion 163 by being inserted into the receiving portion 163, so that it is possible to prevent the short side portion 162 of the top case 160 from being recessed by external impact.

The short-side portion 121 of the support member 120 has a surface structure, so that the protruding portion 122 can be easily injection-molded. The protruding portion 122 is an internal component received by the top case 160. Therefore, although the non-molded portion is formed in the injection molding, a problem occurring in the exterior appearance of the battery pack 100 is minute. According to an embodiment, the protruding portions 122 may be respectively formed in both end portions (short side portions) 121 of the support member 120.

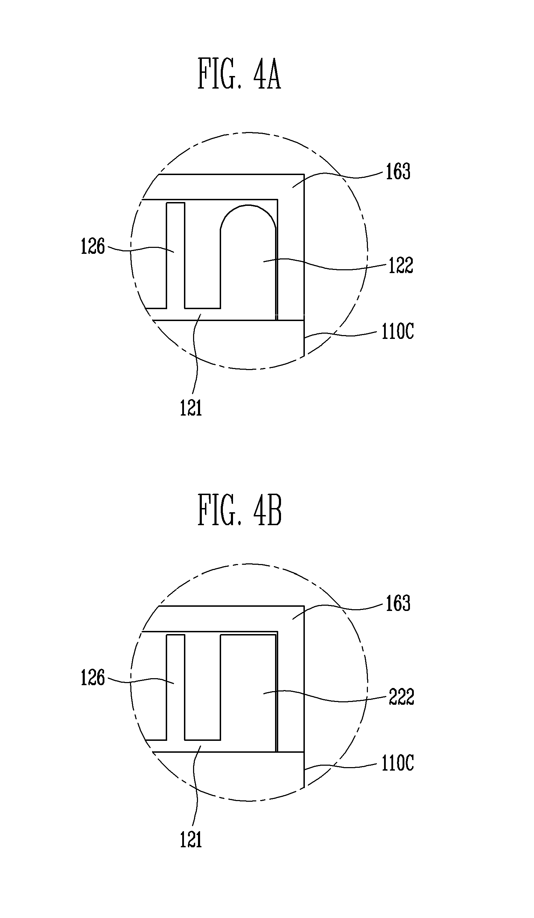

FIG. 4 is a sectional view taken along line A-A of FIG. 1.

Referring to FIG. 4A, the protruding portion 122 is formed on the short side portion 121 of the support member 120. The protruding portion 122 is inserted into the receiving portion 163 of the top case 160 so as to be filled in the receiving portion 163. The support portion 126 may be adhered closely to, or be in close contact with, the bottom surface of the top case 160. In this case, the support portion 126 functions to support the top case 160.

As shown in FIG. 4A, the protruding portion 122 may have a rounded shape. The protruding portion 122 can be easily inserted into the receiving portion 163 due to the rounded shape.

According to another embodiment, a protruding portion 222 may have a rectangular shape as shown in FIG. 4B.

In a case where the protruding portion 222 has a rectangular shape, the protruding portion 222 can be effectively filled in the empty space inside the receiving portion 163, and accordingly, it is possible to provide the battery pack 100 to be stronger against external impact.

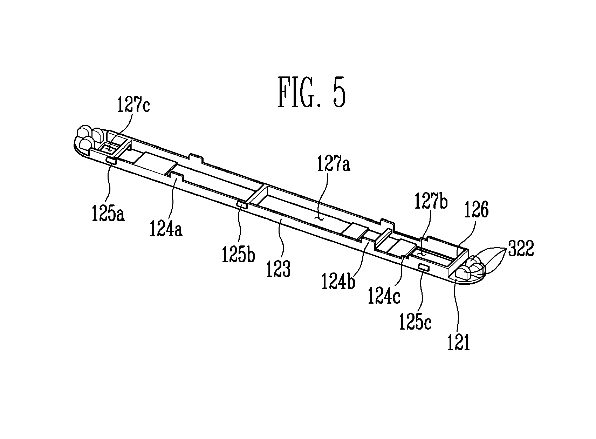

FIG. 5 is a perspective view illustrating a support member according to another embodiment of the present invention.

As shown in FIG. 5, a protruding portion 322 of the support member 120 according to this embodiment is provided with a plurality of protruding portions, also referred to as protrusions. In a case where the protruding portion 322 according to this embodiment is inserted into the receiving portion 163 of the top case 160, external impact can be dispersed due to the shape of the plurality of protrusions, and accordingly, it is possible to provide the battery pack 100 to be stronger against external impact.

While the present invention has been described in connection with certain exemplary embodiments, it is to be understood that the invention is not limited to the disclosed embodiments, but, on the contrary, is intended to cover various modifications and equivalent arrangements included within the scope of the appended claims.

## Claims

1. A battery pack (100), comprising:
a bare cell (110);
a support member (120) mounted to the bare cell for receiving a protection circuit module (130); and
a top case (160) arranged to cover the support member (120);
wherein one end of the support member (120) includes a protruding portion (122, 222, 322), and
a corresponding end of the top case (160) includes a receiving portion (163) that is arranged to receive the protruding portion.

2. The battery pack of claim 1, wherein both ends of the support member (120) include the protruding portion (122, 222, 322).

3. The battery pack of claim 1 or 2, wherein the protruding portion comprises one or more protrusions (122, 222, 322) at the or each end of the support member (120).

4. The battery pack of claim 3, wherein the or each protrusion has a rounded or rectangular profile.

5. The battery pack of any one of the preceding claims, wherein the protruding portion (122, 222, 322) extends from a planar portion (121) of the support member.

6. The battery pack of claim 5, further comprising a support element (126) extending from the support member (120) adjacent to the planar portion for supporting the top case (160).

7. The battery pack of claim 6, further comprising a stepped portion (124c) adjacent to the support element (126) for receiving an end portion of the protection circuit module (130).

8. The battery pack of any one of the preceding claims, wherein the support member further comprises guide portions (124a, 124b) for engaging with corresponding notches (135a, 135b) in the protection circuit module (130).

9. The battery pack of any one of the preceding claims, wherein the support member (120) further comprises a plurality of first fastening portions (125a, 125b, 125c) for engaging with corresponding second fastening portions (167a, 167b, 167c) in the top case (160).

10. The battery pack of claim 9, wherein the first fastening portions comprise fastening projections and the second fastening portions comprise recesses.

11. The battery pack of any one of the preceding claims, further comprising an adhesive member (119) between the support member (120) and the bare cell (110) for fixing the support member to the bare cell.

12. The battery pack of any one of the preceding claims, wherein the protection circuit module (130) includes first and second lead plates (141, 143) connected to the bare cell through first and second through holes (127a, 127b) in the support member (120).

13. The battery pack of any one of the preceding claims, further comprising a fixing projection (118) at one side of the top surface of the bare cell, wherein the support member (120) includes a fixing hole (127c) for receiving the fixing projection.

14. The battery pack of any one of the preceding claims, wherein a top surface of the protruding portion (122, 222, 322) is not in contact with a lower surface of the top case (160).

15. The battery pack of any one of the preceding claims, wherein the height of the protruding portion (122, 222, 322) is less than the depth of the receiving portion (163).
